# FASCICULE DE BREVET EUROPEEN

(11) **EP 1 341 678 B1**
(45) Date de publication et mention de la délivrance du brevet: **22.12.2004**
(21) Numéro de dépôt: 01988020.2
(22) Date de dépôt: 12.12.2001
(51) Int. Cl.: B60B 21/00

(54) **ROUE AVEC JANTE AYANT DES SIEGES INCLINES VERS L'EXTERIEUR ET REALISEE PAR UN PROCEDE D'EXTRUSION**
RADFELGE MIT NACH AUSSEN GENEIGTEN SCHULTERN UND MIT STRANGPRESSVERFAHREN HERGESTELLT
WHEEL WITH RIM HAVING OUTWARD SLOPING SEATS AND PRODUCED BY EXTRUSION PROCESS

(30) Priorité: 13.12.2000 FR 0016811
(43) Date de publication de la demande: 10.09.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: EMBERGER, Thomas, 85110 Kipfenberg (DE); ALFF, Denis, F-63200 Riom (FR)
(74) Mandataire: Dequire, Philippe Jean-Marie Denis
(86) Numéro de dépôt international: PCT/EP2001/014624
(87) Numéro de publication internationale: WO 2002/047923

(56) Documents cités:
- EP-A- 0 796 747
- EP-A- 0 807 539
- WO-A-00/05083
- US-A- 5 718 485
- US-A- 6 138 730

## Description

L'invention a pour objet une roue, composée d'un disque et d'une jante, pour pneumatique, et susceptible de former éventuellement, avec un anneau de soutien de la bande de roulement du pneumatique et le pneumatique, un ensemble roulant pouvant être utile dans le cas de roulage où la pression de gonflage s'abaisse anormalement par rapport à la pression normale d'emploi, dite pression nominale de service, pression pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule lors d'un roulage en virage. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

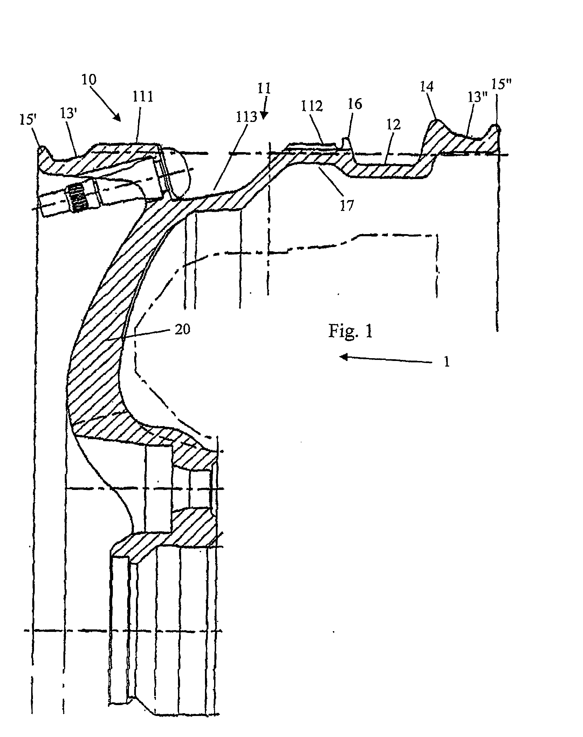

La demande WO 00/05083 décrit à titre d'exemple, en vue de résoudre efficacement le problème ci-dessus, une roue monobloc correspondent au préambule de la revendication 1 et telle que montrée sur la figure 1. Cette roue a une géométrie radialement extérieure comportant un premier et un deuxième sièges destinés à recevoir un bourrelet de pneumatique, au moins le premier siège ayant une génératrice dont l'extrémité axialement extérieure est sur un cercle de diamètre inférieur au diamètre du cercle sur lequel se trouve l'extrémité axialement intérieure, lesdits sièges étant prolongés axialement à l'extérieur par une saillie ou « hump » de faible hauteur, le premier siège étant prolongé axialement à l'intérieur par une paroi cylindrique destinée à recevoir un anneau de soutien de bande de roulement. Cette roue est telle que la paroi cylindrique est constituée d'une première et d'une seconde zones séparées par une gorge circonférentielle débouchant radialement extérieurement. Elle peut être réalisée par moulage d'un alliage d'aluminium en une seule opération.

La présence de la gorge circonférentielle est destinée à diminuer significativement le poids de la roue. Cette roue optimisée en poids présente cependant l'inconvénient, lorsque le profil extérieur comprend une gorge de montage d'un pneumatique, de permettre une accumulation, sous la portion axialement extérieure relativement à la gorge de montage du profil intérieur de la jante de cette roue, de toutes sortes de matières, telles que la boue plus ou moins mélangée à des cailloux, telles que la neige ou glace en conditions hivernales, matières difficilement évacuables.

Afin de permettre l'obtention d'une légèreté optimale et de remédier aux inconvénients ci-dessus, la roue, conforme à l'invention, dont la géométrie radialement extérieure comporte un premier et un deuxième sièges destinés à recevoir un bourrelet de pneumatique, au moins le premier siège ayant une génératrice dont l'extrémité axialement extérieure est sur un cercle de diamètre inférieur au diamètre du cercle sur lequel se trouve l'extrémité axialement intérieure, lesdits sièges étant prolongés axialement à l'extérieur par une saillie ou hump de faible hauteur, ledit premier siège étant prolongé axialement à l'intérieur par une paroi cylindrique, est caractérisée en ce que ladite roue est constituée par l'assemblage :
- d'un disque comportant une portée moyeu, une zone de transition et un bord radialement extérieur dont la géométrie constitue ledit premier siège et une première partie de ladite paroi cylindrique, et
- d'une jante comportant une pluralité de cavités et étant telle que la paroi radialement extérieure de ladite jante correspond audit second siège, au hump et à la seconde partie de ladite paroi cylindrique ;
ledit assemblage étant réalisé à l'extrémité de ladite jante du côté du disque au niveau de ladite paroi cylindrique d'une part et au niveau de l'extrémité de la paroi radialement intérieure de ladite jante d'autre part.

De préférence, la paroi radialement intérieure de la jante a une distance axiale qui diminue progressivement à partir dudit second siège jusqu'à la zone d'assemblage avec le disque.

Cette roue présente de nombreux avantages. Le fait que la jante comporte une pluralité de cavités de formes variables permet de dissocier ses profils radialement extérieur et intérieur. On peut ainsi associer un profil intérieur garantissant aucune rétention d'eau, de glace ou de matières diverses à un profil extérieur avec une gorge de montage de profondeur adaptée pour un montage et un démontage aisés du pneumatique destiné à équiper cette roue. Ces cavités autorisent un allègement substantiel du poids de la jante tout en conservant une inertie de la partie axialement intérieure de la jante très satisfaisante.

La réalisation en deux parties de la roue donne aussi une grande liberté de style au disque qui peut être réalisé par tout procédé approprié de moulage, forgeage, etc.

De préférence, la jante de la roue est réalisée par extrusion, cintrage et soudage d'au moins un profilé métallique, de préférence en alliage d'aluminium. D'autres matériaux peuvent convenir, notamment des matériaux tels que l'acier, ou des alliages de titane, de magnésium, ou encore un alliage d'aluminium, de zinc, magnésium et cuivre dénommé ZAMAC.

Ce procédé de fabrication a l'avantage d'être plus rapide qu'un procédé de moulage et permet aussi d'utiliser des matériaux dont les propriétés mécaniques et de fatigue sont notablement améliorées relativement aux alliages d'aluminium usuellement utilisés dans un procédé de moulage.

Un mode de réalisation de l'assemblage est tel que la jante comporte un premier prolongement sensiblement cylindrique de géométrie adaptée pour coopérer avec le bord radialement extérieur du disque pour compléter la paroi cylindrique adjacente au premier siège et constituer une première zone de liaison entre le disque et la jante et un second prolongement sensiblement cylindrique, disposé radialement intérieurement relativement au premier prolongement, de géométrie adaptée pour coopérer avec la paroi axialement intérieure du bord extérieur du disque pour constituer une seconde zone de liaison entre le disque et la jante.

Avantageusement, les géométries du premier prolongement cylindrique et du bord extérieur du disque sont adaptées pour venir axialement en appui l'une contre l'autre. La géométrie axialement intérieure du bord extérieur du disque peut aussi comporter une portée de paroi radialement extérieure cylindrique destinée à recevoir la paroi radialement intérieure du second prolongement de la jante.

L'assemblage peut aussi comporter un cordon de soudure reliant l'extrémité axialement intérieure de la portée du bord extérieur du disque et la paroi radialement intérieure du second prolongement de la jante. Un second cordon de soudure peut relier l'extrémité axialement intérieure de la première partie de la paroi cylindrique et la partie complémentaire de celle-ci.

Selon un mode de réalisation avantageux, les premier et second prolongements de la jante appartiennent à la cavité de ladite jante disposée axialement le plus extérieurement.

Ce mode de réalisation a l'avantage de renforcer mécaniquement la zone d'assemblage, ce qui améliore aussi sa rigidité et facilite le respect des tolérances de fabrication industrielle.

Plusieurs modes de réalisation sont maintenant décrits, à titre non limitatif, à l'aide du dessin annexé dans lequel :
- la figure 1 est la roue de la figure 3 du document WO 00/05083, vue en coupe méridienne ;
- la figure 2 est une vue en coupe méridienne d'un premier mode de réalisation d'une roue selon l'invention ;
- la figure 3 est une vue en coupe méridienne d'une variante du mode de réalisation de la figure 2 ;
- la figure 4 est une vue en coupe méridienne d'un second mode de réalisation d'une roue selon l'invention ;
- la figure 5 est une vue en coupe méridienne d'un troisième mode de réalisation d'une roue selon l'invention ;
- la figure 6 est une vue en coupe méridienne d'une variante du troisième mode de réalisation de la figure.

La figure 1 présente, en vue méridienne et schématique, une roue 1 monobloc telle que divulguée par la demande de brevet WO 00/05083. Cette roue comprend une jante 10 et un disque 20. La jante 10 comporte deux sièges de jante extérieur 13' et intérieur 13" dont les génératrices sont inclinées vers l'extérieur. Les deux sièges sont prolongés extérieurement par des saillies ou « humps » 15' et 15". Le siège extérieur 13' est prolongé axialement vers l'intérieur par une paroi cylindrique ou portée 11, elle-même munie à son autre extrémité d'une butée de positionnement 16 d'un anneau de soutien destiné à être monté sur cette portée 11. Le siège intérieur 13" est prolongé axialement à l'intérieur par un rebord de jante 14, rebord délimitant avec la butée de positionnement 16 une gorge de montage 12. La portée 11 comporte deux parties 111 et 112 séparées axialement par une gorge circonférentielle 113 débouchant radialement extérieurement. Les diamètres des deux sièges 13' et 13" sont inégaux, le premier siège 13', disposé du côté extérieur de la roue 1, a un diamètre inférieur à celui du second siège 13". Cela permet de diminuer la profondeur de la gorge de montage 12.

Les deux parties 111 et 112 de la paroi cylindrique ou portée 11 sont adaptées pour supporter un anneau de soutien de la bande de roulement du pneumatique destiné à équiper cette roue. De tels anneaux sont, à titre d'exemple, décrits dans la demande EP 0 796 747 et la demande FR 99/07469.

La gorge circonférentielle permet de diminuer substantiellement le poids de la roue 1 et facilite sa réalisation. En dépit de la profondeur limitée de la gorge de montage 12, cette roue présente radialement intérieurement une zone 17 adjacente à la gorge de montage 12 propice à l'accumulation de matières diverses.

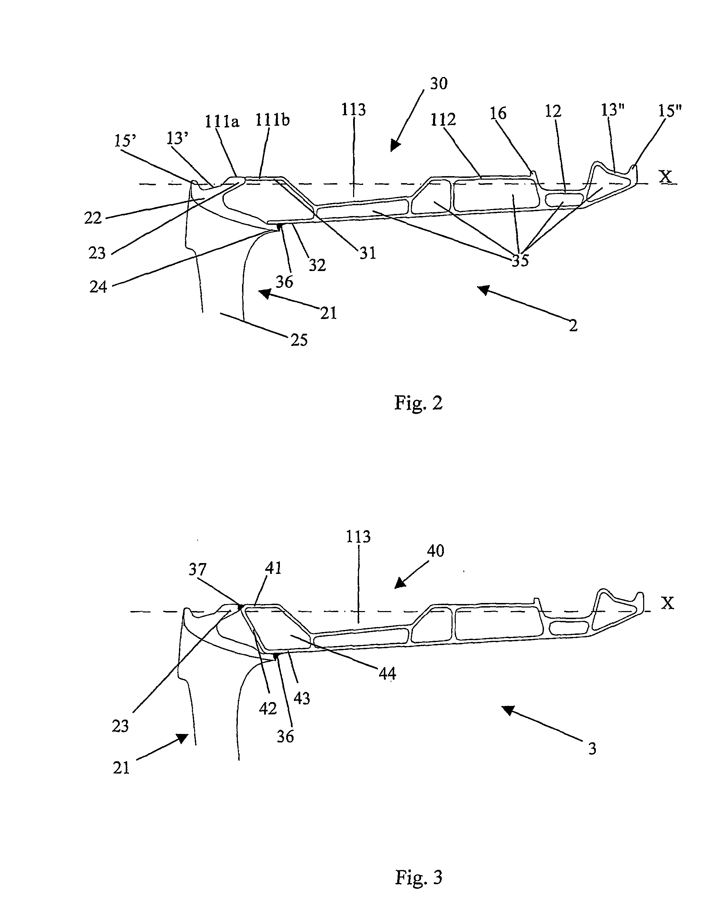

A la figure 2 est présentée un premier mode de réalisation d'une roue selon l'invention. Cette roue 2, monobloc, est constituée par l'assemblage d'un disque 21 et d'une jante 30. La géométrie radialement extérieure de cette roue 2 est tout à fait similaire à celle de la roue 1 : on a notamment deux sièges 13' et 13 ", prolongées axialement extérieurement par deux humps 15' et 15", une paroi cylindrique comportant deux parties 111 et 112 séparées par une gorge circonférentielle 113 et une gorge de montage 12.

En revanche, le profil radialement intérieur de cette roue est très sensiblement différent puisque entre le siège intérieur 13" et la liaison avec la zone de transition 25 du disque 21, le diamètre diminue continûment. Ce profil n'offre aucune zone propice à l'accumulation de matières diverses. Ce résultat est obtenu grâce à la présence dans la jante d'une pluralité de cavités 35 dont le profil radialement extérieur correspond au profil de la jante de la roue 1 et dont le profil radialement intérieur présente une variation monotone. Ces cavités permettent de dissocier complètement les profils radialement intérieur et extérieur de la roue.

Le disque 21 comprend un bord extérieur 22 dont la géométrie radialement extérieure correspond à un siège extérieur 13', à un hump 15' et à une première partie de la paroi cylindrique ou portée 111a similaires à ceux de la roue 1. Ce bord extérieur présente un profil axialement intérieur en forme de U, entre les parties 23, au niveau de la partie 111a de la paroi cylindrique et 24, au niveau du profil radialement intérieur de la jante 30. Ce profil en U à l'avantage de diminuer sensiblement la masse de matière sous le siège extérieur 13', ce qui allège fortement la roue. Un tel allègement ne peut pas être obtenu simplement avec une roue telle que 1.

La jante 30 comprend une pluralité de cavités 35 prolongées axialement extérieurement par le prolongement 31, dont la paroi radialement extérieure est pour partie au niveau de la paroi cylindrique 111b, et le prolongement 32. Le prolongement 31 vient en appui contre la partie 23 du bord extérieur du disque 21. Cela permet de définir précisément la position axiale du disque relativement à la jante. Le prolongement 32 vient en appui sur la paroi radialement extérieure de la partie 24 du bord extérieur du disque 21. Cela permet de centrer précisément la jante relativement au disque lors de l'assemblage. Un cordon de soudure 36 est pratiqué après l'assemblage. Ce cordon de soudure est une soudure d'angle qui procure une soudure bien étanche.

Dans le cas d'une dimension de roue 255x500 A, une comparaison des masses entre les roues 1 et 2 donne une diminution de masse de l'ordre de 2 kg à l'avantage de la roue 2. Cela correspond à un gain de masse de 15%. 255 est la largeur de la roue en millimètres et 500 le diamètre nominal de la roue. A veut dire asymétrique (les deux sièges sont de diamètres différents). Le diamètre nominal des roues correspond à l'axe X sur l'ensemble des figures.

La jante 30 est obtenue par extrusion, cintrage et soudage d'au moins un tronçon de profilé métallique, par exemple en alliage d'aluminium.

Ce profilé est usuellement obtenu par filage ou extrusion d'alliage d'aluminium au travers d'une filière ayant les dimensions et les formes de la section du profilé à réaliser.

Le profilé est alors coupé à longueur puis cintré. On peut par exemple cintrer deux demi-cercles de profilé puis les solidariser par soudure pour obtenir la jante telle que 30.

La figure 3 présente une roue 3, variante de réalisation de la roue 2. La jante 40 de cette roue 3 se distingue de la jante 30 par la géométrie de l'extrémité en contact avec le disque 21. Les prolongements 41 et 43 ont leurs extrémités reliés par une nervure 42. En conséquence, ces trois parties forment avec la paroi adjacente de la cavité 35 adjacente une cavité 44. Cette nervure complémentaire 42 renforce mécaniquement la zone d'assemblage.

L'assemblage entre le disque 21 et la jante 40 de cette roue 3 comprend un second cordon de soudure 37 disposé radialement extérieurement et reliant le prolongement 31 de la jante à la partie 23 du bord extérieur du disque. Ce deuxième cordon de soudure a l'avantage de renforcer mécaniquement la tenue de l'assemblage. Si nécessaire, un léger usinage est pratiqué pour garantir que ce cordon ne s'étend pas radialement au-delà du diamètre extérieur de la paroi cylindrique.

La gorge circonférentielle 113, que présentent les deux roues 2 et 3, peut notamment servir à mettre en place un module de roue incluant un capteur de pression d'un système de surveillance de la pression des pneumatiques d'un véhicule. Une telle localisation ne perturbe en aucune façon le montage et le démontage du pneumatique.

Les appuis destinés à être enfilés sur la paroi cylindrique 11 ont usuellement une largeur telle qu'ils s'appuient sur les deux parties 111 et 112 de cette paroi ou portée.

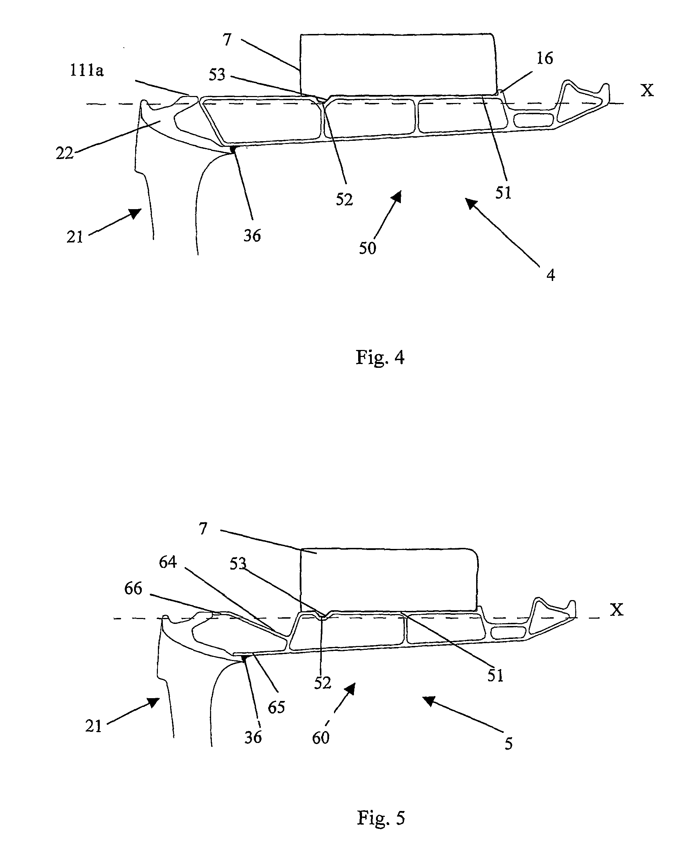

La figure 4 présente un second mode de réalisation d'une roue selon l'invention. La roue 4 a un profil radialement extérieur adapté pour coopérer avec un anneau de soutien 7 fortement allégé relativement aux anneaux précédents. Le profil extérieur de la jante 50 comporte une paroi cylindrique ou portée 51 reliant directement la partie 111a du bord extérieur du disque 21 à la butée de blocage 16. Cet anneau de soutien 7 a une largeur diminuée et comporte, pour rester en place lors du roulage, une nervure élastique circonférentielle 53 destinée à venir combler une rainure circonférentielle 52 adaptée ménagée sur le profil extérieur de la jante 50, lors de l'enfilage de l'anneau sur la portée 51.

La figure 5 présente une variante de la roue 4. Dans cette variante 5, l'assemblage au disque 21 est assurée, du côté de la jante par deux prolongements cylindriques séparés 65 et 66 comme dans le cas de la roue 2. Pour faciliter l'enfilage de l'anneau 7 autour de la paroi cylindrique 51, on a ménagé une gorge circonférentielle 64 débouchant radialement extérieurement entre la zone d'assemblage radialement extérieure 66 et la portée 51.

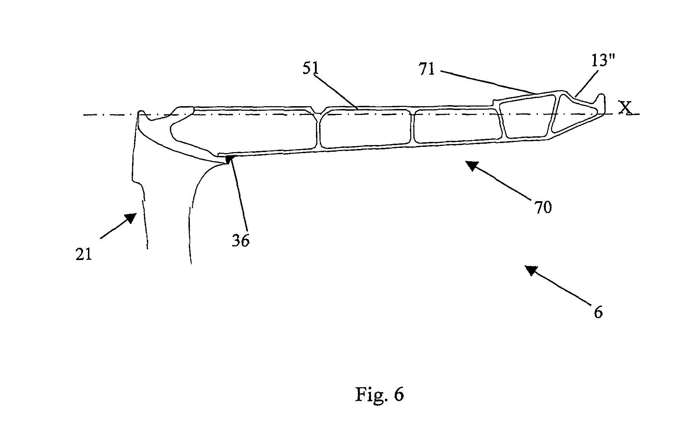

La figure 6 présente un troisième mode de réalisation d'une roue 6 selon l'invention. La roue 6 est constituée par l'assemblage d'un disque 21 et d'une jante 70. Le profil radialement extérieur de la roue 6 ne comporte pas de gorge de montage. A la place, ce profil présente au niveau de la jante 70 une zone tronconique 71 disposée entre le siège intérieur 13" et la portée cylindrique 51. Cette zone tronconique 71 sert de zone de passage du deuxième bourrelet du pneumatique destiné à venir se mettre en place sur le siège intérieur 13". Ce profil permet un montage rapide du pneumatique et de l'anneau de soutien 7 sur la roue 6 par enfilage de l'ensemble autour de la paroi cylindrique 51 axialement vers l'intérieur.

L'ensemble des exemples présentés, à titre non limitatif, montre l'intérêt de la dissociation des profils intérieurs et extérieurs de la roue liée au procédé choisi pour réaliser les jantes.

Cet ensemble montre aussi la souplesse dont dispose le concepteur de la roue pour répondre à ses besoins.

## Revendications

1. Roue (2, 3, 4, 5, 6) dont la géométrie radialement extérieure comporte un premier (13') et un deuxième (13") sièges destinés à recevoir un bourrelet de pneumatique, au moins le premier siège (13') ayant une génératrice dont l'extrémité axialement extérieure est sur un cercle de diamètre inférieur au diamètre du cercle sur lequel se trouve l'extrémité axialement intérieure, lesdits sièges (13', 13") étant prolongés axialement à l'extérieur par une saillie ou hump (15', 15") de faible hauteur, ledit premier siège (13') étant prolongé axialement à l'intérieur par une paroi cylindrique (11), **caractérisée en ce que** ladite roue est constituée par l'assemblage :
- d'un disque (21) comportant une portée moyeu, une zone de transition (25) et un bord radialement extérieur (22) dont la géométrie constitue ledit premier siège et une première partie (111a) de ladite paroi cylindrique (11), et
- d'une jante (30, 40, 50, 60, 70) comportant une pluralité de cavités (35, 44) et telle que la paroi radialement extérieure de ladite jante correspond audit second siège (13") audit hump (15") et à la seconde partie (111b, 112) de ladite paroi cylindrique (11) ;
ledit assemblage étant réalisé à l'extrémité de ladite jante (30, 40, 50, 60, 70) du côté du disque (21) au niveau de ladite paroi cylindrique (11) d'une part et au niveau de l'extrémité de la paroi radialement intérieure (32, 43, 65) de ladite jante d'autre part.

2. Roue (2, 3, 4, 5, 6) selon la revendication 1, dans laquelle la paroi radialement intérieure de la jante (30, 40, 50, 60, 70) a une distance axiale qui diminue progressivement à partir du second siège (13") jusqu'à la zone d'assemblage (32, 43, 65) avec le disque (21).

3. Roue (2, 3, 4, 5, 6) selon l'une des revendications 1 et 2, dans laquelle ladite jante (30, 40, 50, 60, 70) comporte un premier prolongement (31, 41, 66) sensiblement cylindrique de géométrie adaptée pour coopérer avec le bord radialement extérieur (23) du disque (21) pour compléter ladite paroi cylindrique (11) adjacente audit premier siège (13') et constituer une première zone de liaison entre le disque et la jante et un second prolongement (32, 43, 65) sensiblement cylindrique, disposé radialement intérieurement relativement audit premier prolongement, de géométrie adaptée pour coopérer avec la paroi axialement intérieure (24) du bord extérieur (22) du disque (21) pour constituer une seconde zone de liaison entre le disque et la jante.

4. Roue (2, 3, 4, 5, 6) selon l'une des revendications 1 à 3, dans laquelle les géométries dudit premier prolongement cylindrique (31, 41, 66) et du bord extérieur du disque sont adaptées pour venir axialement en appui l'un contre l'autre.

5. Roue (2, 3, 4, 5, 6) selon l'une des revendications 1 à 4, dans laquelle la géométrie axialement intérieure du bord extérieur (22) du disque (21) comporte une portée (24) de paroi radialement extérieure cylindrique destinée à recevoir la paroi radialement intérieure dudit second prolongement (32, 43, 65) de ladite jante.

6. Roue (2, 3, 4, 5, 6) selon l'une des revendications 1 à 5, comportant un cordon de soudure (36) reliant l'extrémité axialement intérieure de la portée (24) du bord extérieur (22) du disque (21) et ladite paroi radialement extérieure du second prolongement (32, 43, 65) de la jante.

7. Roue (3) selon l'une des revendications 1 à 6, comportant un cordon de soudure (37) reliant l'extrémité axialement intérieure de la première partie (23, 111a) de la paroi cylindrique (111) et la partie complémentaire (111b) de ladite paroi cylindrique (111).

8. Roue (3, 4) selon l'une des revendications 1 à 7, dans laquelle lesdits premier (41) et second (43) prolongements de ladite jante (40, 50) appartiennent à la cavité (44) de ladite jante disposée axialement le plus extérieurement.

9. Roue (2, 3, 4, 5) selon l'une des revendications 1 à 8, dans laquelle le profil radialement extérieur de ladite jante (30, 40, 50, 60) comprend une gorge circonférentielle de montage (12).

10. Roue (2, 3, 5) selon l'une des revendications 1 à 9, dans laquelle le profil radialement extérieur de ladite jante (30, 40, 60) comporte une gorge circonférentielle (113, 64) disposée entre deux parties (111, 112) de ladite portée cylindrique (11).

11. Roue (4, 5, 6) selon l'une des revendications 1 à 10, dans laquelle le profil radialement extérieur de ladite portée cylindrique (11) de ladite jante (50, 60, 70) comporte une rainure circonférentielle (52).

12. Roue (2, 3, 4, 5, 6) selon l'une des revendications 1 à 11, dans laquelle ladite jante (30, 40, 50, 60, 70) est réalisée par extrusion puis cintrage et soudage d'un profilé métallique.

13. Roue (2, 3, 4, 5, 6) selon la revendication 12, dans laquelle le profilé est en alliage d'aluminium.

## Patentansprüche

1. Rad (2, 3, 4, 5, 6), dessen radial außen liegende Geometrie einen ersten Sitz (13') und einen zweite Sitz (13") aufweist, die dafür vorgesehen sind, einen Reifenwulst aufzunehmen, wobei mindestens der erste Sitz (13') eine Erzeugende aufweist, deren axial außen liegendes Ende auf einem Kreis mit einem Durchmesser liegt, der kleiner als der Durchmesser des Kreises ist, auf dem sich das axial innen liegende Ende befindet, wobei sich an die Sitze (13', 13") axial nach außen eine Erhöhung oder Hump (15', 15") von geringer Höhe anschließt, wobei sich an den ersten Sitz (13') axial nach innen eine zylindrische Wand (11) anschließt, **dadurch gekennzeichnet, dass** das Rad aus dem Zusammenbau
- einer Radscheibe (21), die eine Auflagefläche, einen Übergangsbereich (25) und einen radial außen liegenden Rand (22) aufweist, dessen Geometrie den erstes Sitz und einen ersten Teil (111a) der zylindrischen Wand (11) bildet, und
- einer Felge (30, 40, 50, 60, 70), die eine Vielzahl von Hohlräumen (35, 44) aufweist und die so gestaltet ist, dass die radial außen liegende Wand der Felge dem zweiten Sitz (13"), dem Hump (15") und dem zweiten Teil (111b, 112) der zylindrischen Wand (11) entspricht,
besteht, wobei der Zusammenbau zum einen bei dem Ende der Felge (30, 40, 50, 60, 70) auf der Seite der Radscheibe (21) im Bereich der zylindrischen Wand (11) und zum anderen im Bereich des Endes der radial innen liegenden Wand (32, 43, 65) der Felge durchgeführt wird.

2. Rad (2, 3, 4, 5, 6) nach Anspruch 1, wobei die radial innen liegende Wand der Felge (30, 40, 50, 60, 70) einen axialen Abstand aufweist, der ab dem zweiten Sitz (13") bis zum Zusammenbaubereich (32, 43, 65) mit der Radscheibe (21) allmählich abnimmt.

3. Rad (2, 3, 4, 5, 6) nach einem der Ansprüche 1 und 2, wobei die Felge (30, 40, 50, 60, 70) ein erstes, im wesentlichen zylindrisches Verlängerungsteil (31, 41, 66) mit einer Geometrie, die daran angepaßt ist, mit dem radial außen liegenden Rand (23) der Radscheibe (21) zusammen zu wirken, um die zylindrische Wand (11) zu vervollständigen, die dem ersten Sitz (13') benachbart ist, und einen ersten Verbindungsbereich zwischen der Radscheibe und der Felge zu bilden, und ein zweites, im wesentlichen zylindrisches Verlängerungsteil (32, 43, 65) umfaßt, das radial innen liegend , bezogen auf das erste Verlängerungsteil, angeordnet ist, mit einer Geometrie, die daran angepaßt ist, mit der axial innen liegenden Wand (24) des äußeren Randes (22) der Radscheibe (21) zusammen zu wirken, um einen zweiten Verbindungsbereich zwischen der Radscheibe und der Felge zu bilden.

4. Rad (2, 3, 4, 5, 6) nach einem der Ansprüche 1 bis 3, wobei die Geometrien des ersten zylindrischen Verlängerungsteils (31, 41, 66) und des äußeren Randes der Radscheibe daran angepaßt sind, axial aufeinander zu liegen zu kommen.

5. Rad (2, 3, 4, 5, 6) nach einem der Ansprüche 1 bis 4, wobei die axial innen liegende Geometrie des äußeren Randes (22) der Radscheibe (21) eine Auflagefläche (24) für die radial außen liegende zylindrische Wand umfaßt, die dafür vorgesehen ist, die radial innen liegende Wand des zweiten Verlängerungsteils (32, 43, 65) der Felge aufzunehmen.

6. Rad (2, 3, 4, 5, 6) nach einem der Ansprüche 1 bis 5, das eine Schweißnaht (36) aufweist, die das axial innen liegende Ende der Auflagefläche (24) des äußeren Randes (22) der Radscheibe (21) mit der radial außen liegenden Wand des zweiten Verlängerungsteils (32, 43, 65) der Felge verbindet.

7. Rad (3) nach einem der Ansprüche 1 bis 6, das eine Schweißnaht (37) umfaßt, die das axial innen liegende Ende des ersten Teils (23, 111a) der zylindrischen Wand (111) mit dem komplementären Teil (111b) der zylindrischen Wand (111) verbindet.

8. Rad (3, 4) nach einem der Ansprüche 1 bis 7, wobei das erste Verlängerungsteil (41) und das zweite Verlängerungsteil (43) der Felge (40, 50) zu dem Hohlraum (44) der Felge gehören, der axial am weitesten außen angeordnet ist.

9. Rad (2, 3, 4, 5) nach einem der Ansprüche 1 bis 8, wobei das radial außen liegende Profil der Felge (30, 40, 50, 60) eine in Umfangsrichtung verlaufende Montagenut (12) aufweist.

10. Rad (2, 3, 5) nach einem der Ansprüche 1 bis 9, wobei das radial außen liegende Profil der Felge (30, 40, 60) eine in Umfangsrichtung verlaufende Nut (113, 64) aufweist, die zwischen den beiden Teilen (111, 112) der zylindrischen Auflagefläche (11) angeordnet ist.

11. Rad (4, 5, 6) nach einem der Ansprüche 1 bis 10, wobei das radial außen liegende Profil der zylindrischen Auflagefläche (11) der Felge (50, 60, 70) eine in Umfangsrichtung verlaufende Nut (52) aufweist.

12. Rad (2, 3, 4, 5, 6) nach einem der Ansprüche 1 bis 11, wobei die Felge (30, 40, 50, 60, 70) durch Druckgießen, anschließendes Walzbiegen und Verschweißen eines Metallprofils erzeugt wird.

13. Rad (2, 3, 4, 5, 6) nach Anspruch 12, wobei das Profil aus einer Aluminiumlegierung besteht.

## Claims

1. A wheel (2, 3, 4, 5, 6), the radially outer geometry of which comprises a first (13') and a second (13") seat which are intended to receive a tyre bead, at least the first seat (13') having a generatrix, the axially outer end of which is on a circle of diameter less than the diameter of the circle on which the axially inner end is located, said seats (13', 13") being extended axially to the outside by a protrusion or hump (15', 15") of low height, said first seat (13') being extended axially to the inside by a cylindrical wall (11), **characterised in that** said wheel is formed by the assembling:
- of a disc (21) comprising a hub bearing surface, a transition zone (25) and a radially outer edge (22), the geometry of which constitutes said first seat and a first part (111a) of said cylindrical wall (11), and
- of a rim (30, 40, 50, 60, 70) comprising a plurality of cavities (35, 44) and being such that the radially outer wall of said rim corresponds to said second seat (13"), to said hump (15") and to the second part (111b, 112) of said cylindrical wall (11);
said assembly being effected at the end of said rim (30, 40, 50, 60, 70) on the side of the disc (21) at the level of said cylindrical wall (11) on one hand and at the level of the end of the radially inner wall (32, 43, 65) of said rim on the other hand.

2. A wheel (2, 3, 4, 5, 6) according to Claim 1, in which the radially inner wall of the rim (30, 40, 50, 60, 70) has an axial distance which gradually decreases from said second seat (13") as far as the zone of assembly (32, 43, 65) with the disc (21).

3. A wheel (2, 3, 4, 5, 6) according to one of Claims 1 and 2, in which said rim (30, 40, 50, 60, 70) comprises a first substantially cylindrical extension (31, 41, 66) of geometry suitable for cooperating with the radially outer edge (23) of the disc (21) for completing said cylindrical wall (11) adjacent to said first seat (13') and constituting a first connection zone between the disc and the rim and a second substantially cylindrical extension (32, 43, 65) arranged radially internally relative to said first extension, of geometry suitable for cooperating with the axially inner wall (24) of the outer edge (22) of the disc (21) for constituting a second connection zone between the disc and the rim.

4. A wheel (2, 3, 4, 5, 6) according to one of Claims 1 to 3, in which the geometries of said first cylindrical extension (31, 41, 66) and of the outer edge of the disc are adapted to come to bear axially against one another.

5. A wheel (2, 3, 4, 5, 6) according to one of Claims 1 to 4, in which the axially inner geometry of the outer edge (22) of the disc (21) comprises a cylindrical radially outer wall bearing surface (24) intended to receive the radially inner wall of said second extension (32, 43, 65) of said rim.

6. A wheel (2, 3, 4, 5, 6) according to one of Claims 1 to 5, comprising a weld bead (36) connecting the axially inner end of the bearing surface (24) of the outer edge (22) of the disc (21) and said radially outer wall of the second extension (32, 43, 65) of the rim.

7. A wheel (3) according to one of Claims 1 to 6, comprising a weld bead (37) connecting the axially inner end of the first part (23, 111a) of the cylindrical wall (111) and the complementary part (111b) of said cylindrical wall (111).

8. A wheel (3, 4) according to one of Claims 1 to 7, in which said first (41) and second (43) extensions of said rim (40, 50) belong to the cavity (44) of said rim located axially most to the outside.

9. A wheel (2, 3, 4, 5) according to one of Claims 1 to 8, in which the radially outer profile of said rim (30, 40, 50, 60) comprises a circumferential mounting groove (12).

10. A wheel (2, 3, 5) according to one of Claims 1 to 9, in which the radially outer profile of said rim (30, 40, 60) comprises a circumferential groove (113, 64) arranged between two parts (111, 112) of said cylindrical bearing surface (11).

11. A wheel (4, 5, 6) according to one of Claims 1 to 10, in which the radially outer profile of said cylindrical bearing surface (11) of said rim (50, 60, 70) comprises a circumferential groove (52).

12. A wheel (2, 3, 4, 5, 6) according to one of Claims 1 to 11, in which said rim (30, 40, 50, 60, 70) is produced by extrusion then bending and welding a metallic profiled element.

13. A wheel (2, 3, 4, 5, 6) according to Claim 12, in which the profiled element is of aluminium alloy.
